# EUROPEAN PATENT SPECIFICATION

(11) **EP 3 254 937 B1**
(45) Date of publication and mention of the grant of the patent: **17.04.2019**
(21) Application number: 17173569.9
(22) Date of filing: 30.05.2017
(51) Int. Cl.: B62D 13/00

(54) **STEERING CONTROL APPARATUS**
LENKSTEUERUNGSVORRICHTUNG
APPAREIL DE COMMANDE DE DIRECTION

(30) Priority: 09.06.2016 JP 2016115504
(43) Date of publication of application: 13.12.2017
(73) Proprietor: AISIN SEIKI KABUSHIKI KAISHA, Kariya-shi Aichi-ken 448-8650 (JP)
(72) Inventor: TODA, Kinichi, Kariya-shi, Aichi-ken 448-8650 (JP)
(74) Representative: Winter, Brandl, Fürniss, Hübner, Röss, Kaiser, Polte - Partnerschaft mbB

(56) References cited:
- EP-A2- 0 223 256
- EP-A2- 2 767 455
- WO-A1-89/01436

## Description

### TECHNICAL FIELD

Exemplary embodiments disclosed herein relate to a steering control apparatus.

### BACKGROUND DISCUSSION

In the related art, when a towed vehicle (trailer) is towed by a towing vehicle, for example, an external force may be input to the towed vehicle in a horizontal direction (yaw direction) due to, for example, the state of a road surface or side wind. In this case, the towed vehicle may be rocked due to the input external force. Such variation in the behavior of the towed vehicle may be transmitted to the towing vehicle side via a connection part, thereby causing the traveling state of the towing vehicle to be unstable. Therefore, a rear-wheel steering apparatus has been proposed, which stabilizes the behavior of a towing vehicle by steering rear wheels of the towing vehicle based on the behavior of a towed vehicle. See, e.g., JP 2010-042759A (Reference

In the case of the above-described related art, although the traveling stability of the corresponding towing vehicle is improved by steering the rear wheels of the towing vehicle, a yaw moment generated due to the rocking of the towed vehicle side may remain. That is, although the behavior of the towing vehicle is stabilized, the behavior of the towed vehicle may remain unstable. In this case, since the behaviors of the towing vehicle and the towed vehicle become different from each other, it may be difficult for the driver of the towing vehicle to grasp the behavior of the towed vehicle, and the driver may perform an unnecessary driving operation in order to recover the behavior of the towed vehicle, which may rather cause damage to the behavior of the towing vehicle. In addition, since it is difficult to grasp the behavior of the towed vehicle on the towing vehicle side, it is difficult to recover the unstable behavior of the towed vehicle.

Thus, a need exists for a steering control apparatus, which can stabilize the behavior of a towed vehicle and may also stabilize the behavior of a towing vehicle.

Further, in EP 2 767 455 A2, disclosing the preamble of the independent claim, an axle assembly is disclosed, wherein the operating performance of the hydraulic aggregate is changed in response to a steering angle adjustment between a steering angle for the former axle and a steering angle for the latter axle.

WO 89/01436 A1 discloses a transport means supported at one end turnably by means of a tractor means by means of which the direction of travel of the transport means is controlled via an adjusting means and a control sensor detecting the angle between the tractor means and the transport means.

EP 0 223 256 A2 relates to a rear wheel steering apparatus for a vehicle with a vehicle speed sensor, a front wheel steer angle sensor, a rear wheel steer angle driving device, and a rear wheel steer angle controller, wherein the controller is adapted to calculate a toe-in quantity of the rear wheels as an increasing function of the vehicle speed, calculate a steer angle of each of the right and left rear wheels by the use of the vehicle speed and the steer angle of the front wheels, and control the rear wheel steer angle driving device on the basis of results of these calculating operations such that the steer angle of each of the right and left rear wheels changes by a predetermined angle.

### SUMMARY

A steering control apparatus according to an aspect of this disclosure includes, for example, a behavior acquisition unit configured to acquire behavior information indicating a behavior of a towed vehicle that is towed by a towing vehicle, a control amount acquisition unit configured to acquire a steering control amount for steering a wheel of the towed vehicle according to the behavior information acquired by the behavior acquisition unit, and a control unit configured to control a steering apparatus of the towed vehicle based on the steering control amount. The control amount acquisition unit determines the steering control amount such that a yaw moment occurs so as to cancel out a yaw moment that is occurring in the towed vehicle based on the yaw moment that is occurring in the towed vehicle, a vehicle weight, and a vehicle speed of the towing vehicle or the towed vehicle. According to this configuration, for example, since behavior correction may be completed on the towed vehicle side, the traveling stability of the towed vehicle may be improved. In addition, since the behavior of the towed vehicle is stabilized, a force such as, for example, the swinging of the towed vehicle is not transmitted to the towing vehicle side. As a result, the traveling stability of the towing vehicle side may also be improved.

In addition, in the steering control apparatus, for example, the control unit may independently control a left wheel and a right wheel of the towed vehicle. According to this configuration, for example, the traveling state of the towed vehicle may be more smoothly stabilized within a short time.

In addition, in the steering control apparatus, for example, the control unit may adjust toe-in angles of the wheels of the towed vehicle based on a speed of the corresponding towed vehicle when the towed vehicle travels straight. According to this configuration, for example, the stability of the towed vehicle during linear traveling may be more improved.

In addition, in the steering control apparatus, for example, the control unit may interlockingly steer the wheels of the towed vehicle in the same direction.

In addition, in the steering control apparatus, for example, the behavior acquisition unit may acquire steering information of the towing vehicle, and the control amount acquisition unit may determine the steering control amount of the towed vehicle based on the steering information of the towing vehicle and the behavior information of the towed vehicle. According to this configuration, for example, since it is easy to control the behavior of the towed vehicle to follow the behavior of the towing vehicle, the improvement of the traveling stability of the integrated whole of the towing vehicle and the towed vehicle is facilitated.

In addition, in the steering control apparatus, for example, when the towing vehicle turns, the control unit may control the steering apparatus of the towed vehicle to steer in an opposite phase to that of wheels of the towing vehicle. According to this configuration, for example, since the control of the heading direction of the towed vehicle is performed independently of the towing vehicle, the turning performance of the towed vehicle is improved. As a result, since a need of taking into consideration an inner wheel difference between the towed vehicle and the towing vehicle is reduced and the towing vehicle is capable of being traveled along the shortest turning path, it is possible to widen the travelable range of the towing vehicle.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view for explaining a configuration of a towed vehicle which is mounted with a steering control apparatus according to an exemplary embodiment;
Fig. 2 is a schematic view illustrating a towed vehicle which is mounted with the steering control apparatus according to the exemplary embodiment and a towing vehicle which tows the towed vehicle in order to explain a behavior in a case where the towed vehicle receives an input of an external force;
Fig. 3 is a view illustrating the towed vehicle which is mounted with the steering control apparatus according to the exemplary embodiment and the towing vehicle which tows the towed vehicle in order to explain a case where rocking is canceled out on the towed vehicle side;
Fig. 4 is a view illustrating the towed vehicle which is mounted with the steering control apparatus according to the exemplary embodiment and the towing vehicle which tows the towed vehicle in order to explain the steering state of the towed vehicle in a case of straight traveling;
Fig. 5 is a view for explaining a track while the towed vehicle and the towing vehicle which tows the towed vehicle turn in a case where the steering control apparatus according to the exemplary embodiment is not operated; and
Fig. 6 is a view for explaining a track while the towed vehicle and the towing vehicle which tows the towed vehicle turn in a case where the steering control apparatus according to the exemplary embodiment is operated.

### DETAILED DESCRIPTION

Hereinafter, an exemplary embodiment of this disclosure will be disclosed. A configuration of the exemplary embodiment illustrated below and the actions, results, and effects caused by the corresponding configuration are given by way of example. This disclosure may be implemented by a configuration other than the configuration disclosed in the following exemplary embodiments, and may acquire at least one of various effects based on the basic configuration and derivative effects.

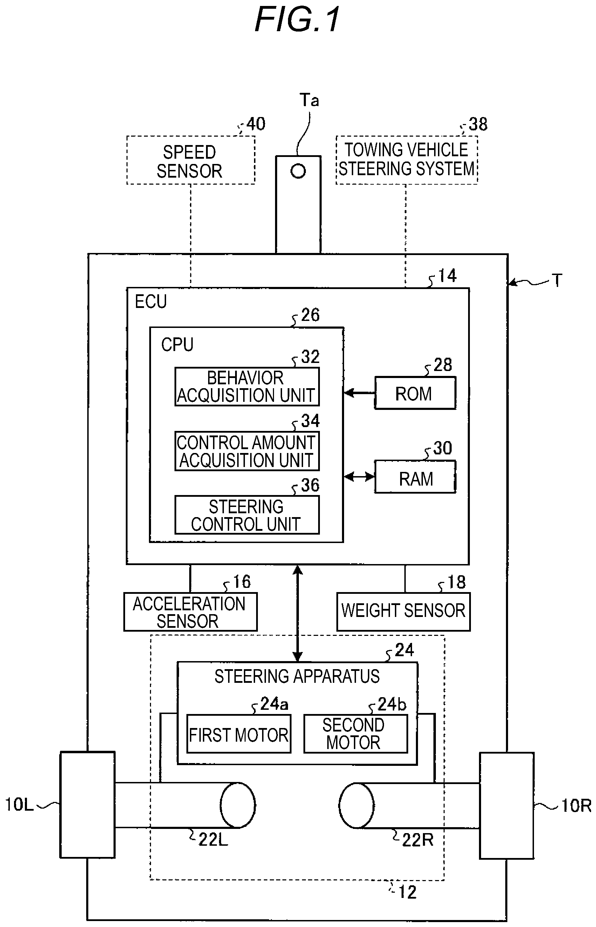

Fig. 1 is a schematic view for explaining a configuration of a towed vehicle T which is mounted with a steering control apparatus according to an exemplary embodiment. The towed vehicle T may be, for example, a carrier type on which a load is loaded, or a box type including at least one of, for example, a passenger space, a residence section, and a storage space. In one example, the towed vehicle T illustrated in Fig. 1 includes a pair of wheels (a left wheel and a right wheel) 10L and 10R, and is towed by a towing vehicle (not illustrated) via a tow connection part Ta. Thus, the towed vehicle T in Fig. 1 is a driven vehicle that does not include driving wheels for traveling.

The towed vehicle T includes a steering system 12, an electronic control unit (ECU) 14, an acceleration sensor 16, a weight sensor 18, and so on. The acceleration sensor 16 (a horizontal (G) sensor or the like) is provided, for example, near the position of the center of gravity of the towed vehicle T so as to acquire information regarding at least the rocking situation (the situation of yawing) of the towed vehicle T in the horizontal direction. The weight sensor 18 detects the weight of the towed vehicle T in the loading state. The ECU 14 controls the steering system 12 so as to generate the force that cancels out the yawing based on the detection result (e.g., a yawing situation) of the acceleration sensor 16, thereby achieving the stabilization of the traveling state of the towed vehicle T. In addition, the ECU 14 suppresses variation in the behavior of the towing vehicle by stabilizing the behavior of the towed vehicle T, and improves the traveling stability of the corresponding towing vehicle.

The steering system 12 includes a steering mechanism 22L that steers the wheel 10L, a steering mechanism 22R that steers the wheel 10R, and a steering apparatus 24 that operates the steering mechanisms 22L and 22R. The steering mechanism 22L may use a known mechanism, and may move a knuckle arm by, for example, a tie rod, which is movable forward or backward in the vehicle width direction, so as to change the angle relative to the heading direction of the wheel 10L connected to the corresponding knuckle arm. In the same manner, the steering mechanism 22R changes the angle relative to the heading direction of the wheel 10R. The steering apparatus 24 includes a first motor 24a that operates the steering mechanism 22L and a second motor 24b that operates the steering mechanism 22R. The first motor 24a moves the tie rod of the steering mechanism 22L forward or backward in the vehicle width direction according to the rotation direction. In the same manner, the second motor 24b moves the tie rod of the steering mechanism 22R forward or backward in the vehicle width direction according to the rotation direction. In addition, the configurations of the steering mechanisms 22L and 22R and the steering apparatus 24 are given by way of example, and other configurations may be provided so long as the configurations are capable of independently controlling (independently steering) the wheels 10L and 10R.

The ECU 14 includes, for example, a central processing unit (CPU) 26, a read only memory (ROM) 28, and a random access memory (RAM) 30. The CPU 26 includes various modules implemented by reading and executing programs, which are installed and stored in a memory device such as the ROM 28. For example, the CPU 26 includes a behavior acquisition unit 32, a control amount acquisition unit 34, and a steering control unit 36. In addition to the programs for operating the CPU 26, the ROM 28 stores, for example, conversion information (conversion data, a conversion table, and a conversion formula (calculation formula)) referenced when determining a control value for controlling the steering apparatus 24 (the first motor 24a and the second motor 24b) based on data acquired from, for example, the acceleration sensor 16 and the weight sensor 18. In addition, the conversion information may be an aspect that causes the steering apparatus 24 (the first motor 24a and the second motor 24b) to directly acquire a control amount thereof based on data acquired from the acceleration sensor 16, the weight sensor 18, and the like, and may be divided into a plurality of types so as to acquire each value step by step. For example, the conversion information may be divided into, for example, conversion information for acquiring a yaw moment that is occurring in the towed vehicle T based on an acceleration acquired by the acceleration sensor 16, conversion information for acquiring a steering angle based on the yaw moment, and conversion information for acquiring the control amount of the first motor 24a and the second motor 24b, which implement the steering angle, based on a vehicle weight and a vehicle speed. The RAM 30 temporarily stores various data used in calculations in the CPU 26. For example, the CPU 26, the ROM 28, and the RAM 30 may be integrated in the same package, or may be provided in individual packages. In addition, although an example in which the behavior acquisition unit 32, the control amount acquisition unit 34, and the steering control unit 36 are modularized by function is illustrated, a plurality of functions may be integrated in a single module.

The behavior acquisition unit 32 acquires acceleration data from, for example, the acceleration sensor 16 as behavior information indicating the behavior of the towed vehicle T, for example, the yawing situation of the towed vehicle T. In addition, the behavior acquisition unit 32 acquires weight information indicating the current loading state of the towed vehicle T from the weight sensor 18 as information having an effect on the behavior of the towed vehicle T (information indicating the behavior).

The control amount acquisition unit 34 acquires, with reference to the conversion information held in the ROM 28, the control amount of the wheels 10L and 10R (the control amount of the steering apparatus) corresponding to the behavior of the towed vehicle T. For example, the control amount acquisition unit 34 acquires a yaw moment that is currently occurring in the towed vehicle T using acceleration data detected by the acceleration sensor 16 and the conversion information. The conversion information may be, for example, a conversion table, which represents a relationship between the acceleration data and the yaw moment that may occur at that time, or may be a conversion formula (calculation formula), which calculates a yaw moment by using an acceleration as a variable. In addition, the control amount acquisition unit 34 acquires, with reference to the conversion information held in the ROM 28, the control amount of the steering apparatus 24 (the first motor 24a and the second motor 24b), which implements the steering angle of the wheels 10L and 10R for causing the behavior of the towed vehicle T such that a yaw moment occurs so as to cancel out the yaw moment (horizontal rocking force) that is currently occurring in the towed vehicle T. In this case, the conversion information may be a conversion table, which represents a relationship between the yaw moment that is currently being generated in the towed vehicle T and the steering angle of the wheels 10L and 10R for generating the yaw moment in the opposite direction that cancels out the yaw moment, or may be a conversion formula (calculation formula) for calculating the steering angle using the yaw moment that is currently being generated in the towed vehicle T as a variable. In addition, the control amount acquisition unit 34 determines the control amount of the first motor 24a and the second motor 24b, which implements the acquired steering angle, based on the weight of the towed vehicle T (vehicle weight + load weight) and the vehicle speed of the towed vehicle T. In this case, the control amount acquisition unit 34 refers to conversion information, which represents, for example, a relationship between the weight and the speed of the towed vehicle T determined for each steering angle and the control amounts of the first motor 24a and the second motor 24b. In addition, the conversion information referenced by the control amount acquisition unit 34 is given by way of example, and may use conversion information, which directly derives the control amounts of the first motor 24a and the second motor 24b from the acceleration, weight, and speed of the towed vehicle T.

The steering control unit 36 rotates the first motor 24a and the second motor 24b of the steering apparatus 24 according to the control amounts acquired by the control amount acquisition unit 34, thereby changing the angle relative to the heading direction of the wheels 10L and 10R via the steering mechanisms 22L and 22R.

In addition to the behavior of the towed vehicle T, the behavior acquisition unit 32 may acquire information regarding the behavior of the towing vehicle, which tows the corresponding towed vehicle T. The behavior acquisition unit 32 acquires, for example, information from a towing vehicle steering system 38 on the towing vehicle side, as the behavior of the towing vehicle. This information indicates whether the steering apparatus of the towing vehicle is performing straight steering control or turning steering control. In addition, when the towing vehicle is performing turning control, this information may be information indicating, for example, the turning direction or the steering angle of the towing vehicle. In addition, the behavior acquisition unit 32 acquires the speed of the towing vehicle from a speed sensor 40 such as a vehicle speed sensor or a wheel speed sensor of the towing vehicle. In addition, since it may be regarded that the towing vehicle and the towed vehicle T have the same speed, a speed sensor may be provided on the towed vehicle T and the vehicle speed may be acquired therefrom.

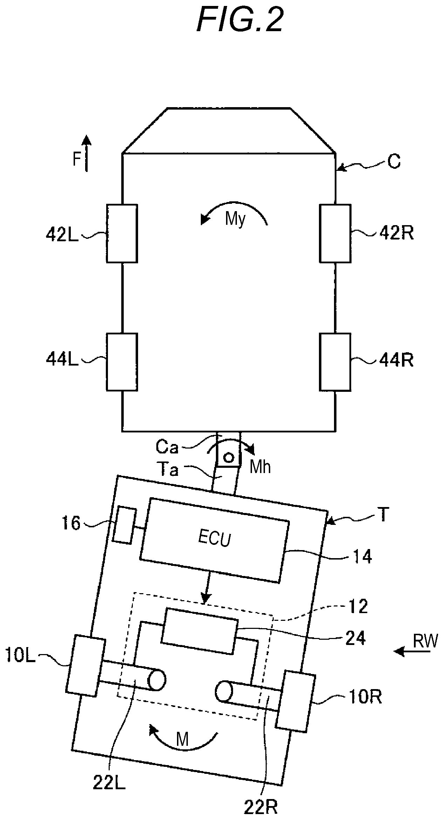

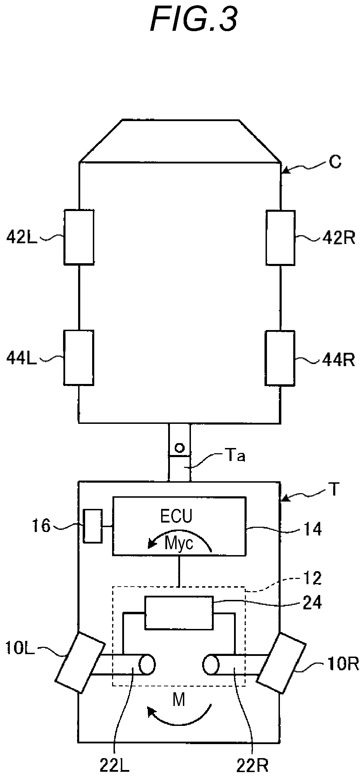

A control example performed by the steering control apparatus in a case where the towed vehicle T towed by the towing vehicle C receives a rocking force in the horizontal direction (in a case where a yaw moment is generated) due to the input of an external force (e.g., the input of the uneven state of the road surface or the input of side wind) will be described with reference to Figs. 2 and 3. Fig. 2 is a schematic view illustrating a towed vehicle T which is mounted with the steering control apparatus according to the exemplary embodiment and a towing vehicle C which tows the towed vehicle T in order to explain a behavior in a case where the towed vehicle T receives an input of an external force. Fig. 3 is a view illustrating the towed vehicle T which is mounted with the steering control apparatus according to the exemplary embodiment and the towing vehicle C which tows the towed vehicle T in order to explain a case where rocking is canceled out on the towed vehicle T side.

The towing vehicle C is a front-wheel drive vehicle by wheels 42L and 42R, a rear-wheel drive vehicle by wheels 44L and 44R, or a four-wheel drive vehicle, and travels in the direction of the arrow F (forward direction). In addition, the towed vehicle T is a non-drive vehicle and is driven to travel in the direction of the arrow F. In this case, when the towed vehicle T receives, for example, side wind (the arrow RW) from the right direction, a horizontal rocking force (yaw moment) M is generated in the towed vehicle T, which is a driven vehicle (non-drive vehicle). Since the tow connection part Ta of the towed vehicle T is connected to and restricted by a tow connection part Ca of the towing vehicle C, when a yaw moment M occurs in the towed vehicle T, a force (a yaw moment Mh) is generated at the connection position of the tow connection part Ta and the tow connection part Ca to turn the towed vehicle T, which is tilted to the left direction, back to the heading direction (the direction of the arrow F) of the towing vehicle C. As a result, in the towing vehicle C affected by the yaw moment Mh, a yaw moment My occurs, for example, at the center of gravity of the corresponding towing vehicle C. That is, a force is generated to rock the towing vehicle C, thus causing the traveling of the towing vehicle C to be unstable.

As described above, since the towed vehicle T includes the acceleration sensor 16, which may detect at least a horizontal acceleration, the ECU 14 may detect that the towed vehicle T that is traveling begins to be rocked upon receiving a horizontal force (that a yaw moment occurs). The ECU 14 acquires the yaw moment M that has occurred in the towed vehicle T based on the acquired acceleration, and also acquires (calculates) the steering control amount of the steering apparatus 24, which implements the steering angles of the wheels 10R and 10L, such as the occurrence of a yaw moment Myc that cancels out the yaw moment M. As illustrated in Fig. 3, since the wheels 10L and 10R of the towed vehicle T are driven wheels, a counterclockwise turning force (yaw moment Myc) is generated by rightward steering. The ECU 14 determines the control amount of the steering apparatus 24 (the first motor 24a and the second motor 24b) that steers the wheels 10L and 10R based on the yaw moment M that is occurring in the towed vehicle T, the vehicle weight (including the load weight), and the vehicle speed (the speed of the towing vehicle C or the towed vehicle T).

In addition, when the yaw moment Myc occurs against the yaw moment M as described above, the yaw moment M changes in a direction in which the yaw moment M settles down. The ECU 14 may monitor the state of the yaw moment (the combined state of the yaw moment M and the yaw moment Myc) that is occurring in the towed vehicle T via the acceleration sensor 16 at a predetermined processing cycle. Therefore, after the control of canceling the yaw moment M begins, the ECU 14 performs control to newly generate the yaw moment Myc with respect to the combined yaw moment of the yaw moment M and the yaw moment Myc that is generated to cancel out the yaw moment M, and gradually attenuates the rocking of the towed vehicle T, and finally controls the behavior of the towed vehicle T to a stable state in which the behavior of the towed vehicle T follows the behavior of the towing vehicle C.

As described above, since the canceling of the yaw moment M is completed only on the towed vehicle T side, the steering control apparatus of the exemplary embodiment may stabilize the traveling of the towed vehicle T. In addition, it is possible to prevent or reduce the occurrence of a yaw moment Mh at the tow connection part Ca as described above in Fig. 2. That is, since it is possible to cause a force transmitted from the towed vehicle T to the towing vehicle C (a force that causes the behavior of the towing vehicle C to be unstable) not to occur or unlikely to occur, the behavior of the towing vehicle C may be stabilized. In addition, since the behavior of the towed vehicle T is stabilized regardless of the operation of a driver who drives the towing vehicle C and becomes a behavior following the behavior of the towing vehicle C, mismatch between the behavior of the towing vehicle C, which is perceived by the driver, and the behavior of the towed vehicle T is reduced. As a result, there is a merit in that the ease of operating the towing vehicle C may be improved, or an increase in fatigue during a towing operation may be reduced in the case of towing the towed vehicle.

In addition, in a case where sudden braking or sudden steering is performed when the towing vehicle C is traveling while towing the towed vehicle T, a phenomenon in which the towing vehicle C and the towed vehicle T are bent at the tow connection part Ta (the tow connection part Ca), so-called "jack knife phenomenon" may occur. According to the steering control apparatus of the exemplary embodiment, the ECU 14 may detect the acceleration (yaw moment M) of the towed vehicle T via the acceleration sensor 16 in a case where a shift to the jack knife phenomenon is about to happen. In addition, the ECU 14 controls the steering apparatus 24 (the wheels 10L and 10R) so as to generate the yaw moment Myc that cancels out the yaw moment M, which causes the jack knife phenomenon. Thus, according to the steering control apparatus of the exemplary embodiment, it is possible to suppress the occurrence of the jack knife phenomenon.

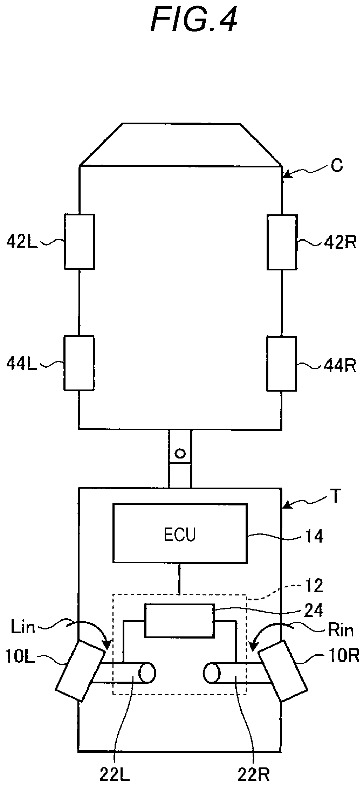

As described above, the ECU 14 of the steering control apparatus according to the exemplary embodiment controls the steering apparatus 24 (the first motor 24a and the second motor 24b) so as to independently control the angles relative to the heading direction of the wheels 10L and 10R by the steering mechanisms 22L and 22R. Fig. 4 is a view illustrating the towed vehicle T which is mounted with the steering control apparatus according to the exemplary embodiment and the towing vehicle C which tows the towed vehicle T in order to explain the steering state of the towed vehicle T in a case of straight traveling. In this case, the ECU 14 may steer the wheel 10L in the direction Lin and steer the wheel 10R in the direction Rin so as to control the respective angles relative to the heading direction to become a "toe-in" angle. The straight traveling stability of the towed vehicle T is improved when the wheel 10L and the wheel 10R take "toe-in" angles. When the towed vehicle T travels straight, since the flow rate of air applied to a vehicle body increases as the vehicle speed increases, the behavior of the towed vehicle T greatly varies. That is, the towed vehicle T is easy to yaw. Therefore, the ECU 14 may control (adjust) the toe-in angles of the wheels 10L and 10R by the steering apparatus 24 (the first motor 24a and the second motor 24b) in a manner in which the toe-in angle increases as the vehicle speed acquired from the speed sensor 40 increases. In this case, the steering control apparatus may contribute to the improvement of traveling stability of the towed vehicle T (towing vehicle C) by suppressing the occurrence of the yaw moment M itself in advance. In addition, even if the yaw moment M occurs in the towed vehicle T, the steering control apparatus may cancel out the occurring yaw moment M, thereby contributing to the improvement of traveling stability of the towed vehicle T (towing vehicle C). In addition, when the vehicle speed is low, variation in the behavior of the towed vehicle T is small. Therefore, when the vehicle speed of the towed vehicle T is low, the toe-in angle may be small. In the case where the toe-in angle is small, the wheels 10L and 10R easily roll as compared to the case in which the toe-in angle is large, which may contribute to the improvement of fuel economy. In addition, the toe-in angle with respect to the vehicle speed may be controlled in a manner in which the speed area is divided into, for example, a "low-speed area", a "medium-speed area", and a "high-speed area", respectively, and the toe-in angle with respect to the vehicle speed intermittently varies as "toe-in angle-small," "toe-in angle-medium," and "toe-in angle-large," or the toe-in angle may be controlled so as to continuously vary with respect to variation in vehicle speed.

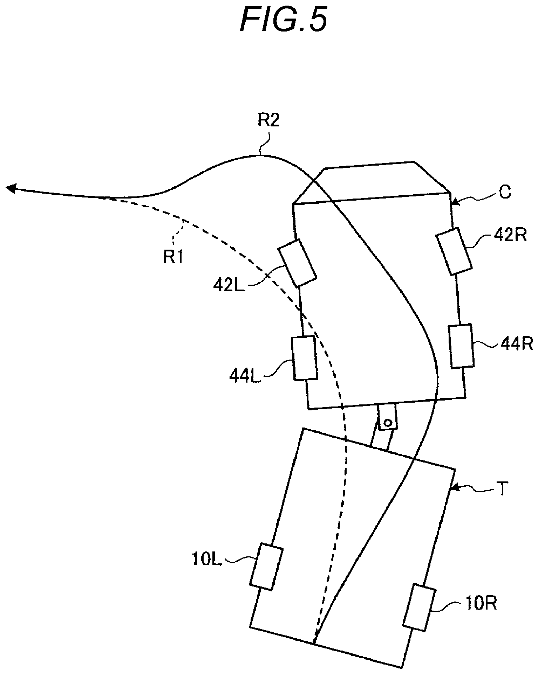

Now, it is assumed that the towing vehicle C which tows the towed vehicle T turns. Fig. 5 is a view for explaining a track while the towed vehicle T and the towing vehicle C which tows the towed vehicle T turn in a case where the steering control apparatus according to the exemplary embodiment is not operated. As illustrated in Fig. 5, for example, in the case where the wheels 42L and 42R are steered so as to turn leftward, since there is an inner wheel difference between the towed vehicle T and the towing vehicle, the wheels 10L and 10R of the towed vehicle T do not pass through the same traveling path as the wheels 42L and 42R or the wheels 44L and 44R of the towing vehicle C. In this case, the wheels 10L and 10R of the towed vehicle T turn more inward than the towing vehicle C. For example, in order to cause the towed vehicle T to pass through a traveling path R1, the towing vehicle C needs to turn so as to pass through a traveling path R2, which is positioned closer to the outside of the turning (e.g., on the centerline side) as compared to the case where the towing vehicle C travels alone.

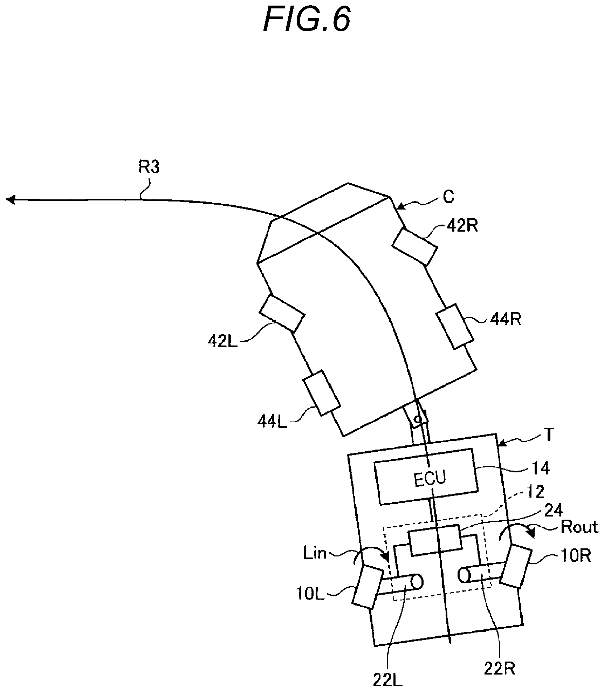

As described above, the ECU 14 of the steering control apparatus according to the exemplary embodiment controls the steering apparatus 24 (the first motor 24a and the second motor 24b) so as to independently control the angles relative to the heading direction of the wheels 10L and 10R by the steering mechanisms 22L and 22R. Fig. 6 is a view for explaining a track while the towed vehicle T and the towing vehicle C which tows the towed vehicle T turn in a case where the steering control apparatus according to the exemplary embodiment is operated. In this case, the ECU 14 acquires steering information regarding the steering direction or the steering angle of the towing vehicle C from the towing vehicle steering system 38 via the behavior acquisition unit 32, and controls (steers) the steering direction of the steering apparatus 24 of the towed vehicle T in an opposite phase to the steering direction of the towing vehicle C. For example, the ECU 14 steers the wheel 10L in the direction Lin and controls the angle relative to the heading direction so as to become a "toe-in" angle. In addition, the ECU 14 steers the wheel 10R in the direction Rout and controls the angle relative to the heading direction so as to become a "toe-out" angle. As a result, since the leftward turning performance of the towed vehicle T is improved, the towing vehicle C may turn along the shortest path R3. In this way, the towing vehicle may not need to turn through the traveling path R2, which is expanded to the outer wheel side in consideration of the inner wheel difference, and may suppress an increase in the yaw moment that occurs during the turning. As a result, it is possible to contribute to the improvement of the traveling stability of the towing vehicle C. In addition, since the towing vehicle C may prevent the unnecessary occurrence of a yaw moment, the amount of rolling of the towed vehicle T may be reduced. In addition, since the yaw rate of the towed vehicle T is reduced by the steering of the wheels 10L and 10R of the towed vehicle T, the yaw moment of the towed vehicle T is reduced. In addition, since the yaw moment of the towed vehicle T is reduced during the turning, the amount of rolling that occurs during the turning may be suppressed to a minimum. In this point, it is possible to contribute to the improvement of the traveling stability of the towed vehicle T. In addition, this is the same as in a case of performing rightward turning.

In addition, in the above-described exemplary embodiment, the wheels 10L and 10R of the towed vehicle T are independently steerable leftward or rightward. In another exemplary embodiment, the wheels 10L and 10R of the towed vehicle T may be interlocked so as to be steered in the same direction. In this case, the steering apparatus 24 has one steering motor and moves a tie rod, which is connected to a knuckle arm of the wheel 10L and a knuckle arm of the wheel 10R, forward or backward in the vehicle width direction. In this case, the control illustrated in Fig. 3 or Fig. 6 is enabled, and due to the simplification in the configuration, it is possible to contribute to the processing load reduction in the CPU 26 and the cost reduction in the towed vehicle T.

In addition, although descriptions have been made with reference to an example in which the towed vehicle T which is mounted with the steering control apparatus of the exemplary embodiment includes a pair of left and right wheels 10L and 10R (two wheels), this disclosure is not limited thereto. For example, the towed vehicle T may include multiple pairs of left and right wheels (e.g., four wheels or six wheels). In this case, all of the left and right wheels may be made steerable, or any pair of right and left wheels may be steerable. In addition, foremost left and right wheels may be steerable, and rearmost left and right wheels may be made steerable. In addition, left and right wheels therebetween may be made steerable. Since the yaw moment Myc that cancels out the yaw moment M occurring in the towed vehicle T may occur even if either side of left and right wheels is steered, the same effect as the above-described exemplary embodiment may be acquired. In addition, in the case where the wheel base of the towed vehicle T is long, when the rearmost left and right wheels are steered, the same yaw moment Myc may occur at a smaller steering angle as compared with the case in which the foremost left and right wheels are steered. That is, the control amount of the steering apparatus 24 may be reduced. Accordingly, when any one pair of left and right wheels are steered in a case of the towed vehicle T having multiple left and right wheels, it may be desirable to steer the rearmost left and right wheels from the viewpoint of control efficiency. In addition, in the towed vehicle T, when multiple pairs of left and right wheels are steered, traveling stability may be more improved as the number of steering times increases.

In addition, although Fig. 1 illustrates the example in which the ECU 14 is mounted in the towed vehicle T, the ECU 14 may be mounted on the towing vehicle C side.

## Claims

1. A steering control apparatus comprising:
a behavior acquisition unit (32) configured to acquire behavior information indicating a behavior of a towed vehicle (T) that is towed by a towing vehicle (C);
a control amount acquisition unit (34) configured to acquire a steering control amount for steering wheels (10R, 10L) of the towed vehicle (T) according to the behavior information acquired by the behavior acquisition unit (32); and
a control unit (36) configured to control a steering apparatus (24) of the towed vehicle (T) based on the steering control amount,
**characterized in that**
the control amount acquisition unit (34) determines the steering control amount such that a yaw moment (Myc) occurs so as to cancel out a yaw moment (M) that is occurring in the towed vehicle (T) based on the yaw moment (M) that is occurring in the towed vehicle (T), a vehicle weight, and a vehicle speed of the towing vehicle (C) or the towed vehicle (T).

2. The steering control apparatus according to claim 1,
wherein the control unit (36) independently controls a left wheel (10L) and a right wheel (10R) of the towed vehicle (T).

3. The steering control apparatus according to claim 1 or 2,
wherein the control unit (36) adjusts toe-in angles (Rin, Lin) of the wheels (10R, 10L) of the towed vehicle (T) based on a speed of the towed vehicle (T) when the towed vehicle (T) is traveling straight.

4. The steering control apparatus according to claim 1,
wherein the control unit (36) interlockingly steers the wheels (10R, 10L) of the towed vehicle (T) in the same direction.

5. The steering control apparatus according to any one of claims 1 to 4,
wherein the behavior acquisition unit (32) acquires steering information of the towing vehicle (C), and
the control amount acquisition unit (34) determines the steering control amount of the towed vehicle (T) based on the steering information of the towing vehicle (C) and the behavior information of the towed vehicle (T).

6. The steering control apparatus according to claim 5,
wherein, when the towing vehicle (C) turns, the control unit (36) controls the steering apparatus (24) of the towed vehicle (T) to steer in an opposite phase to that of wheels (42R, 42L) of the towing vehicle (C).

## Patentansprüche

1. Lenksteuervorrichtung mit:
einer Verhalten-Erfassungseinheit (32), die konfiguriert ist, Verhaltensinformation zu erfassen, die ein Verhalten eines gezogenen Fahrzeugs (T) anzeigt, das durch ein Zugfahrzeug (C) gezogen wird;
einer Steuerbetrag-Erfassungseinheit (34), die konfiguriert ist, einen Lenksteuerbetrag für Lenkräder (10R, 10L) des gezogenen Fahrzeugs (T) gemäß der Verhaltensinformation zu erfassen, die durch die Verhaltens-Erfassungseinheit (32) erfasst wird; und
eine Steuereinheit (36), die konfiguriert ist, eine Lenkvorrichtung (24) des gezogenen Fahrzeugs (T) auf Grundlage des Lenksteuerbetrags zu steuern,
**dadurch gekennzeichnet, dass**
die Steuerbetrag-Erfassungseinheit (34) den Lenksteuerbetrag so bestimmt, dass ein Giermoment (Myc) auf Grundlage eines Giermoments (M), das in dem gezogenen Fahrzeug (T) auftritt, eines Fahrzeuggewichts und einer Fahrzeuggeschwindigkeit des Zugfahrzeugs (C) oder des gezogenen Fahrzeugs (T) auftritt, um das Giermoment (M) auszugleichen, das in dem gezogenen Fahrzeug (T) auftritt.

2. Lenksteuervorrichtung gemäß Anspruch 1,
wobei die Steuereinheit (36) ein linkes Rad (10L) und ein rechtes Rad (10R) des gezogenen Fahrzeugs (T) unabhängig voneinander steuert.

3. Lenksteuervorrichtung gemäß Anspruch 1 oder Anspruch 2,
wobei die Steuereinheit (36) Vorspurwinkel (Rin, Lin) der Räder (10R, 10L) des gezogenen Fahrzeugs (T) auf Grundlage einer Geschwindigkeit des gezogenen Fahrzeugs (T) anpasst, wenn das gezogene Fahrzeug (T) geradeaus fährt.

4. Lenksteuervorrichtung gemäß Anspruch 1,
wobei die Steuereinheit (36) die Räder (10R, 10L) des gezogenen Fahrzeugs (T) verschließend in die gleiche Richtung lenkt.

5. Lenksteuervorrichtung gemäß einem der Ansprüche 1 bis 4,
wobei die Verhalten-Erfassungseinheit (32) die Lenkinformation des Zugfahrzeugs (C) erfasst, und
die Steuerbetrag-Erfassungseinheit (34) den Lenksteuerbetrag des gezogenen Fahrzeugs (T) auf Grundlage der Lenkinformation des Zugfahrzeugs (C) und der Verhaltensinformation des gezogenen Fahrzeugs (T) bestimmt.

6. Lenksteuervorrichtung gemäß Anspruch 5,
wobei, wenn das Zugfahrzeug (C) abbiegt, die Steuereinheit (36) die Steuervorrichtung (24) des gezogenen Fahrzeugs (T) so steuert, dass sie in eine zu den Rädern (42R, 42L) des Zugfahrzeugs (C) entgegengesetzte Phase lenkt.

## Revendications

1. Appareil de commande de direction comprenant :
une unité d'acquisition de comportement (32) configurée de manière à acquérir des informations de comportement indiquant un comportement d'un véhicule remorqué (T) qui est remorqué par un véhicule remorqueur (C) ;
une unité d'acquisition de quantité de commande (34) configurée de manière à acquérir une quantité de commande de direction pour des roues directrices (10R, 10L) du véhicule remorqué (T) selon les informations de comportement acquises par l'unité d'acquisition de comportement (32) ; et
une unité de commande (36) configurée de manière à commander un appareil de direction (24) du véhicule remorqué (T) sur la base de la quantité de commande de direction,
**caractérisé en ce que**
l'unité d'acquisition de quantité de commande (34) détermine la quantité de commande de direction de sorte qu'un moment de lacet (Myc) se produit de manière à annuler un moment de lacet (M) qui se produit dans le véhicule remorqué (T) sur la base du moment de lacet (M) qui se produit dans le véhicule remorqué (T), d'un poids de véhicule, et d'une vitesse de véhicule du véhicule remorqueur (C) ou du véhicule remorqué (T).

2. Appareil de commande de direction selon la revendication 1,
dans lequel l'unité de commande (36) commande indépendamment une roue gauche (10L) et une roue droite (10R) du véhicule remorqué (T).

3. Appareil de commande de direction selon la revendication 1 ou 2,
dans lequel l'unité de commande (36) ajuste des angles d'attaque (Rin, Lin) des roues (10R, 10L) du véhicule remorqué (T) sur la base d'une vitesse du véhicule remorqué (T) lorsque le véhicule remorqué (T) se déplace en ligne droite.

4. Appareil de commande de direction selon la revendication 1,
dans lequel l'unité de commande (36) dirige, par interverrouillage, les roues (10R, 10L) du véhicule remorqué (T), dans la même direction.

5. Appareil de commande de direction selon l'une quelconque des revendications 1 à 4,
dans lequel l'unité d'acquisition de comportement (32) acquiert des informations de direction du véhicule remorqueur (C), et
l'unité d'acquisition de quantité de commande (34) détermine la quantité de commande de direction du véhicule remorqué (T) sur la base des informations de direction du véhicule remorqueur (C) et des informations de comportement du véhicule remorqué (T).

6. Appareil de commande de direction selon la revendication 5,
dans lequel, lorsque le véhicule remorqueur (C) effectue un virage, l'unité de commande (36) commande l'appareil de direction (24) du véhicule remorqué (T) en vue de diriger celui-ci dans une phase opposée à celle des roues (42R, 42L) du véhicule remorqueur (C).
